# EUROPÄISCHE PATENTSCHRIFT

(11) **EP 4 011 581 B1**
(45) Veröffentlichungstag und Bekanntmachung des Hinweises auf die Patenterteilung: **14.02.2024**
(21) Anmeldenummer: 20213675.0
(22) Anmeldetag: 14.12.2020
(51) Int. Cl.: B28B 1/00, B28B 7/32, B28B 7/34, B33Y 10/00, B33Y 40/00, B33Y 80/00, E04G 15/02, E04G 15/06, E04G 21/04, E04B 1/35

(54) **3D-DRUCKVERFAHREN ZUR HERSTELLUNG EINES GEGENSTANDS AUS BETON ODER MÖRTEL MIT EINER DURCHFÜHRUNG**
3D PRINTING METHOD FOR PRODUCING AN OBJECT FROM CONCRETE OR MORTAR WITH A FEEDTHROUGH
PROCÉDÉ D'IMPRESSION 3D DESTINÉ À LA FABRICATION D'UN OBJET EN BÉTON OU EN MORTIER DOTÉ D'UNE TRAVERSÉE

(43) Veröffentlichungstag der Anmeldung: 15.06.2022
(73) Patentinhaber: Saint-Gobain Weber France, 94370 Sucy en Brie (FR)
(72) Erfinder: ALTIN, Muhammed Nasuh, 52222 Stolberg (DE); KRETTEK, Lukas, 52146 Würselen (DE); GUHL, Tim, 52134 Herzogenrath (DE); KLEYER, Dieter, 52146 Würselen (DE)
(74) Vertreter: Feist, Florian Arno

(56) Entgegenhaltungen:
- WO-A1-2020/068119
- CN-A- 106 088 610
- CN-A- 109 180 112
- CN-U- 209 011 362
- CN-U- 209 211 695
- FR-A1- 3 073 170

## Beschreibung

Die Erfindung betrifft ein Verfahren zur Herstellung eines Gegenstands aus Beton oder Mörtel mittels 3D-Druck.

Der 3D-Druck von Gegenständen aus Beton oder Mörtel ist an sich bekannt. Dabei wird eine Beton- oder Mörtelmasse entsprechend der Form des zu erzeugenden Gegenstands in Form von Bahnen schichtweise aufeinander aufgebracht. Aus dem zu erzeugten Rohgegenstand mit der gewünschten Form entsteht der Gegenstand durch Aushärten der Beton- oder Mörtelmasse. Lediglich beispielhaft sei auf EP1587995A2, US2015072068A1, EP3260258A1 und EP3284879A1 verwiesen.

Mittels 3D-Druck sind Gegenstände aus Beton oder Mörtel mit hoher gestalterischer Flexibilität herstellbar. Das 3D-Druckverfahren gelangt jedoch dann an seine Grenzen, wenn Gegenstände mit Durchführungen erzeugt werden sollen, wie sie beispielsweise bei Betonwänden mit Fenster- oder Türöffnungen oder Durchführungen für Kabelkanäle, Abflussrohre, Wasserleitungen oder ähnliches auftreten. Oberhalb einer solchen Durchführung können keine Bahnen der Beton- oder Mörtelmasse abgeschieden werden, weil diese im noch nicht ausgehärteten Zustand einer Stabilisierung bedürfen. Die Stabilisierung wird durch die darunterliegenden Bahnen gewährleistet, welche im Falle der Durchführung nicht vorhanden sind. Beim 3D-Druck von Kunststoffgegenständen ist es in solchen Fällen üblich, eine pfeiler- oder geflechtartige Stützstruktur zu drucken, was beim 3D-Druck von Gegenständen aus Beton oder Mörtel jedoch nicht möglich ist, da solche vergleichsweise filigranen Strukturen nicht realisierbar sind.

Aus CN209011362U und FR 3073170A1 sind Verfahren zur Herstellung einer Betonwand mittels 3D-Druck bekannt, wobei ein Tür- oder Fensterrahmen während der Herstellung eingesetzt wird, um welchen der Beton herum gedruckt wird.

Aus CN209211695U ist ein Verfahren zur Herstellung einer Betonwand mit einer Fensteröffnung mittels 3D-Druck bekannt. Zur Erzeugung der Fensteröffnung wird eine Stützstruktur eingesetzt, um welche der Beton herum gedruckt wird. Die Stützstruktur ist mit einem Magneten ausgestattet, um sie im Anschluss an den 3D-Druck mit einem magnetischen Werkzeug entnehmen zu können.

Aus CN106088610A ist ein Verfahren zur Herstellung einer Betonwand mit einer Fenster- oder Türöffnung mittels 3D-Druck bekannt. Zur Erzeugung der Öffnung wird eine temporäre Stützstruktur aus Polystyrol-Schaum eingesetzt, um welche der Beton herum gedruckt wird und welche anschließend abgetragen wird.

Es besteht Bedarf an verbesserten Verfahren zum 3D-Druck von Gegenständen aus Beton oder Mörtel, welche die Herstellung eines Gegenstands mit einer Durchführung ermöglichen. Der vorliegenden Erfindung liegt die Aufgabe zugrunde, ein solches Verfahren bereitzustellen.

Die Aufgabe der Erfindung wird erfindungsgemäß gelöst durch ein Verfahren gemäß dem unabhängigen Anspruch 1. Bevorzugte Ausführungen gehen aus den abhängigen Ansprüchen hervor.

Beim 3D-Druck von Gegenständen aus Beton oder Mörtel werden Bahnen einer Beton- oder Mörtelmasse schichtweise aufeinander aufgebracht. Die Erfindung beruht darauf, zur Erzeugung einer Durchführung während des 3D-Drucks eine Stützstruktur anzubringen, die geeignet ist, die oberhalb der Stützstruktur befindlichen Teile des Gegenstands während des Aushärtens der Beton- oder Mörtelmasse abzustützen. Die Stützstruktur kann eine temporäre Stützstruktur sein, welche wieder entfernt wird, wenn die Beton- oder Mörtelmasse soweit ausgehärtet ist, dass der Bereich oberhalb der Durchführung keiner mechanischen Abstützung mehr bedarf. Die Stützstruktur kann aber auch dafür vorgesehen sein, im Gegenstand zu verbleiben, und ihrerseits eine Durchführung aufweisen, welche dann die Durchführung des Gegenstands bildet. So können Elemente wie Kabelkanäle, Rohrleitungen oder Fenstereinsätze direkt während des 3D-Drucks im Gegenstand integriert werden. Das Verfahren ist also, den Erfordernissen im Anwendungsfall entsprechend, sehr flexibel anwendbar. Das sind große Vorteile der vorliegenden Erfindung.

In einem ersten Verfahrensschritt des erfindungsgemäßen Verfahrens zur Herstellung eines Gegenstands aus Beton oder Mörtel mittels 3D-Druck wird ein unterer Abschnitt des Gegenstands gedruckt. Dazu wird zumindest eine Bahn einer Beton- oder Mörtelmasse aufgebracht, bevorzugt werden mehrere Bahnen schichtweise aufeinander aufgebracht, wodurch der besagte untere Abschnitt erzeugt wird. Dieser untere Abschnitt des Gegenstands wird im Sinne der Erfindung als Sockelabschnitt bezeichnet.

Die nach oben weisende Oberfläche des Sockelabschnitts (beziehungsweise der obersten Bahn des Sockelabschnitts) kann gedanklich in einen Durchführungsbereich und einen Wandbereich aufgeteilt werden. Der Durchführungsbereich ist derjenige Bereich, oberhalb dessen eine Durchführung durch den Gegenstand vorgesehen ist. Der Wandbereich ist derjenige Bereich, oberhalb dessen an die Durchführung grenzende Beton- oder Mörtelmasse aufgebracht werden soll. Auf dem Durchführungsbereich wird in einem zweiten Verfahrensschritt eine Stützstruktur angeordnet. Die Stützstruktur deckt den gesamten Durchführungsbereich ab. Der Durchführungsbereich und die Stützstruktur erstrecken sich von einer Seitenfläche des Gegenstands (beziehungsweise des Sockelabschnitts als bis dahin erzeugter Teil des Gegenstands) bis zu einer weiteren Seitenfläche, bevorzugt bis zur gegenüberliegenden Seitenfläche des Gegenstands, damit eine durchgehende Durchführung durch den Gegenstand erzeugt wird. Die Stützstruktur kann auch als Stützelement bezeichnet werden.

Der Wandbereich grenzt einseitig an den Durchführungsbereich an, wenn die Durchführung direkt an eine Seitenfläche des Gegenstands anschließt. Andernfalls ist der Wandbereich in zwei Unterbereiche aufgeteilt, die durch den Durchführungsbereich voneinander getrennt sind, und der Wandbereich grenzt beidseitig an den Durchführungsbereich an. Auf den Wandbereich wird in einem dritten Verfahrensschritt mindestens eine weitere Bahn der Beton- oder Mörtelmasse aufgebracht, bevorzugt werden mehrere weitere Bahnen der Beton- oder Mörtelmasse schichtweise aufeinander aufgebracht, wodurch ein einseitig an die Stützstruktur angrenzender Wandabschnitt erzeugt wird oder zwei beidseitig an die Stützstruktur angrenzende Wandabschnitte des Gegenstands erzeugt werden. Die Wandabschnitte sind im Sinne der Erfindung diejenigen Abschnitte des Gegenstands, die seitlich benachbart zur Durchführung angeordnet sind und diese seitlich begrenzen. Die Höhe des Wandabschnitts oder der Wandabschnitte entspricht im Wesentlichen der Höhe der Stützstruktur, so dass Stützstruktur und Wandabschnitt(e) oben im Wesentlichen bündig sind.

In einem vierten Verfahrensschritt wird anschließend mindestens eine weitere Bahn der Beton- oder Mörtelmasse auf den Wandabschnitt beziehungsweise die Wandabschnitte einerseits und die Stützstruktur andererseits aufgebracht, bevorzugt werden mehrere weitere Bahnen der Beton- oder Mörtelmasse schichtweise aufeinander aufgebracht. Dadurch wird ein oberhalb der Wandabschnitte und der Durchführung befindlicher Abschnitt des Gegenstands erzeugt, der im Sinne der Erfindung als Deckabschnitt bezeichnet wird.

Die Beton- oder Mörtelmasse wird typischerweise mittels eines Druckkopfs aufgebracht, der eine Düse umfasst. Dieser Düse wird die Beton- oder Mörtelmasse mittels einer Pumpe über eine Zuleitung zugeführt.

Die Beton- oder Mörtelmasse enthält zumindest eine Gesteinskörnung, ein Bindemittel und Zugabewasser. Die Gesteinskörnung kann natürlichen oder synthetischen Ursprungs sein. Als Bindemittel wird bevorzugt Zement oder Kalk eingesetzt. Optional kann die Beton- oder Mörtelmasse Betonzusatzstoffe und/oder Betonzusatzmittel enthalten. Die Beton- oder Mörtelmasse ist fließfähig und kann somit durch den Druckkopf abgeschieden werden. Nach der Abscheidung beginnt die Beton- oder Mörtelmasse auszuhärten, wobei sie ihre Fließfähigkeit infolge chemischer Prozesse (insbesondere der Einlagerung des Zugabewassers als Kristallwasser: Hydratation) und Verdunstung von Zugabewasser verliert. Dabei wird der Zementleim zu Zementstein umgewandelt. Das Aushärten umfasst insbesondere zunächst das Ansteifen, anschließend das Erstarren und wiederum anschließend das Erhärten der Beton- oder Mörtelmasse. Das Ansteifen stellt die erste Phase der Hydratation dar, wobei die Beton- oder Mörtelmasse noch verarbeitet werden kann. Während der daran anschließenden Phase des Erstarrens (Abbindens) tritt eine signifikante Viskositätszunahme auf. Während der letzten Phase des Erhärtens wird die Hydratation vervollständigt.

Das vollständige Erhärten kann mehrere Monate in Anspruch nehmen. Es ist nicht notwendig, die gesamte Phase des Erhärtens abzuwarten, bevor die Stützstruktur entfernt werden kann, falls eine solche Entfernung vorgesehen ist. Das Aushärten im Sinne der Erfindung umfasst daher insbesondere die Phasen des Ansteifens und Erstarrens, so dass der Rohgegenstand seine Fließfähigkeit verloren hat und eine hinreichende Stabilität aufweist, wobei keine unerwünschte plastische Verformung der Beton- oder Mörtelmasse, beispielsweise unter dem Einfluss der Schwerkraft, mehr auftritt.

Betonzusatzstoffe sind pulverförmige oder flüssige Zusätze, die bestimmte Eigenschaften der Beton- oder Mörtelmasse beeinflussen. Als Betonzusatzstoffe können mineralische Feinstoffe (beispielsweise Gesteinsmehl, Flugasche, Tuff, Trass und/oder Silicastaub), organische Stoffe (beispielsweise Kunstharzdispersionen, insbesondere zur Verbesserung von Verarbeitbarkeit und Haftung), Farbpigmente und/oder Fasers (insbesondere Stahl-, Glas- oder Kunststofffasern) eingesetzt werden. Betonzusatzmittel sind in Wasser gelöste oder aufgeschlämmte Mittel, die der Beton- oder Mörtelmasse beigemischt werden, um ihre Eigenschaften, beispielsweise Verarbeitbarkeit, Abbindeverhalten, Erhärten oder Dauerhaftigkeit, durch physikalische und/oder chemische Wirkungen zu verändern. Als Betonzusatzmittel können beispielsweise Betonverflüssiger, Fließmittel, Stabilisierer, Luftporenbildner, Erstarrungsbeschleuniger, Erhärtungsbeschleuniger, Erstarrungsverzögerer, Erhärtungsverzögerer und/oder Dichtungsmittel eingesetzt werden. Der Anteil an Betonzusatzmitteln beträgt bevorzugt weniger als 4 Gew.-% der Beton- oder Mörtelmasse, besonders bevorzugt höchstens 4 Gew.-%, beispielsweise von 0,2 Gew.-% bis 2 Gew.-%.

Die Düse kann als einfaches Rohr mit in Fließrichtung der Beton- oder Mörtelmasse konstantem Querschnitt ausgebildet sein, oder auch einen sich verjüngenden oder erweiternden Querschnitt aufweisen. Die Austrittsöffnung der Düse kann beliebig geformt sein, um einen im konkreten Anwendungsfall geeigneten Austrittsquerschnitt zu erreichen.

Die Form der Düse, insbesondere ihrer Austrittsöffnung, ist bevorzugt an die Breite und Dicke der zu erzeugenden Bahn an Beton- oder Mörtelmasse angepasst. Die Beton- oder Mörtelmasse wird der Düse über eine Zuleitung zugeführt, welche insbesondere Rohr- und/oder Schlauchleitungen umfasst.

Während des Abscheidens einer Bahn der Beton- oder Mörtelmasse wird der Druckkopf in eine Richtung bewegt, welche im Sinne der Erfindung als Bewegungsrichtung des Druckkopfes oder Abscheiderichtung bezeichnet wird. Eine Bahn ist eine in sich zusammenhängende Schicht der Beton- oder Mörtelmasse, welche durch die Bewegung des Druckknopfes entlang der Bewegungsrichtung erzeugt wird. Die Bahn kann gerade sein oder auch jede beliebige andere Form aufweisen. Die Bahn kann auch eine geschlossene Form bilden, indem ihr Ende wieder zum Anfang zurückgeführt wird. Die Dimension einer Bahn in Abscheiderichtung wird im Sinne der Erfindung als Länge der Bahn bezeichnet. Die dazu senkrechte Dimension in der Ebene der Bahn wird als Breite der Bahn bezeichnet. Nachdem eine Bahn erzeugt wurde, wird die nächste Bahn als Schicht oberhalb dieser Bahn abgeschieden. Die Richtung, in der die Bahnen schichtweise übereinander abgeschieden werden, wird im Sinne der Erfindung als Aufwuchsrichtung bezeichnet. Der Gegenstand wird somit durch den 3D-Druck in Aufwuchsrichtung "von unten nach oben" schichtweise aufgebaut. Die Dimension einer Bahn in Aufwuchsrichtung (senkrecht zu Länge und Breite) wird im Sinne der Erfindung als Dicke der Bahn bezeichnet. Die summierte Dicke der Bahnen ergibt die Höhe des Gegenstands.

Die Breite und Dicke der Bahnen kann insbesondere durch die Gestaltung der Düse, die Konsistenz der Beton- oder Mörtelmasse sowie die Förderrate der Beton- oder Mörtelmasse eingestellt werden. Die Dicke und die Breite aller Bahnen sind bevorzugt gleich und konstant. Das ist vorteilhaft hinsichtlich einer schnellen und technisch einfachen Abscheidung, weil die Bahnen dann durch eine gleichmäßige Bewegung des Druckkopfes erzeugt werden können, ohne währenddessen Einstellungen an Fördergeschwindigkeit oder Düsenform vornehmen zu müssen. Die Länge aller Bahnen des Sockelabschnitts und des Deckabschnitts kann konstant sein, so dass alle Bahnen an ihrem Anfang und ihrem Ende bündig angeordnet sind. Selbiges gilt für die Summe der Länge der Bahnen derselben Ebene des Wandabschnitts beziehungsweise der Wandabschnitte sowie der Länge der Stützstruktur. So wird ein Gegenstand mit konstanter Abmessung erzeugt. Es ist aber auch problemlos möglich, dass eine Bahn eine geringere Länge aufweist als die darunterliegende Bahn, so dass die darunterliegende Bahn nicht vollständig mit der Bahn bedeckt wird. So kann ein Gegenstand erzeugt werden, der sich insgesamt oder abschnittsweise von unten nach oben verjüngt. Die Länge, Breite und Dicke der Bahnen kann vom Fachmann den Erfordernissen des Anwendungsfalls entsprechend frei gewählt werden. Die Breite beträgt beispielsweise von 10 mm bis 500 mm, insbesondere von 20 mm bis 100 mm, die Dicke beispielsweise von 5 mm bis 100 mm, insbesondere von 10 mm bis 50 mm, was mit typischen Düsen problemlos herstellbar ist. Die maximal erreichbare Höhe des Gegenstands ist abhängig von der Konstruktion des Roboters und des Druckbettes (Druckunterlage). Die maximal erreichbare Höhe kann beispielsweise dadurch vergrößert werden, indem das Druckbett vertikal beweglich gelagert wird und während des Drucks nach unten gefahren wird.

In einer vorteilhaften Ausführung werden die Bahnen mit alternierender Abscheiderichtung aufgebracht, so dass aufeinanderfolgende Bahnen mit entgegengesetzter Bewegungsrichtung des Druckkopfes abgeschieden werden. Der Anfang einer Bahn fällt somit mit dem Ende der darunterliegenden Bahn zusammen. Das ist vorteilhaft im Hinblick auf einen zeitsparenden Aufbau des Gegenstands, weil der Druckknopf nicht vom Ende der Bahn zum Anfang zurückbewegt werden muss, bevor die nächste Bahn abgeschieden wird. Beim Übergang von einer Bahn auf die darüber liegende Bahn kann der Austritt der Beton-oder Mörtelmasse aus der Düse unterbrochen werden, so dass die Bahnen voneinander getrennt sind. Alternativ kann der Austritt der Beton- oder Mörtelmasse aber auch fortgesetzt werden, so dass benachbarte Bahnen nicht voneinander getrennt sind, sondern nach Art einer Kehrschleife miteinander durch Beton- oder Mörtelmasse verbunden sind. Grundsätzlich ist es natürlich auch möglich die Bahnen mit gleicher Abscheiderichtung aufzubringen. Die Ausführungen gelten für solche Bahnen, die keine geschlossenen Formen bilden und deren Anfang und Ende daher voneinander beabstandet sind. Bilden die Bahnen eine geschlossene Form, so werden bevorzugt alle Bahnen mit der gleichen Abscheiderichtung aufgebracht.

Die Abscheidung der Bahnen der Beton- oder Mörtelmasse erfolgt bevorzugt mittels eines Roboters, insbesondere Industrieroboters, der den Druckkopf bewegt. Der 3D-Druck erfolgt vorteilhafterweise automatisiert mit Hilfe von CAD-Verarbeitung, wobei einer Verarbeitungsmaschine die CAD-Daten des Gegenstands bereitgestellt werden und die Verarbeitungsmaschine mittels der CAD-Daten die Bahnen zur Erzeugung des Gegenstands abscheidet. Der Druckkopf ist besonders bevorzugt an einem Roboterarm montiert. Es können aber auch Industrieroboter eingesetzt werden, die weniger Bewegungsfreiheitsgrade aufweisen als ein Roboterarm. Die Bewegung des Druckknopfes erfolgt bevorzugt computergestützt anhand der CAD-Daten (*computer-aided design,* rechnerunterstützte Konstruktion). Die Bahnen können so mit hoher Präzision und Geschwindigkeit und geringer Arbeitsintensität abgeschieden werden, um den Gegenstand zu erzeugen.

Begriffe wie "unten" und "oben", "oberhalb" und "unterhalb", "obere Oberfläche", "seitlich" und dergleichen beziehen sich im Sinne der Erfindung auf die Aufwuchsrichtung des Gegenstands, wobei eine Bahn, die später abgeschieden wurde als eine andere Bahn, sich oberhalb dieser anderen Bahn befindet.

Der Gegenstand (und ebenso jede Bahn und jeder Abschnitt des Gegenstands) weist eine nach oben weisende obere Oberfläche und eine nach unten weisende untere Oberfläche auf, sowie vier Seitenflächen. Die vier Seitenflächen sind zwei Stirnflächen und zwei sich zwischen diesen erstreckende Querseitenflächen. Die Stirnflächen erstrecken sich entlang der Breitendimension und werden durch den Anfang und das Ende der Bahnen gebildet. Die Querseitenflächen erstrecken sich entlang der Längendimension und werden durch die seitlichen Begrenzungen der Bahnen gebildet. Typischerweise sind die Querseitenflächen die längeren Seitenflächen und die Stirnflächen die kürzeren Seitenflächen des Gegenstands. Falls die Bahnen eine geschlossene Form bilden, entfallen die Stirnflächen, da das Ende der Bahnen wieder zum Anfang zurückgeführt und mit diesem verbunden wird. Da die Bahnen herstellungsbedingt typischerweise abgerundete Seitenkanten aufweisen, sind die Seitenflächen keine ebenen Flächen, sondern weisen Wölbungen mit dazwischen liegenden Einschnitten auf.

Der Durchführungsbereich und die darauf angeordnete Stützstruktur erstreckt sich erfindungsgemäß von einer ersten Seitenfläche des Gegenstands bis zu einer zweiten Seitenfläche, so dass eine durchgehende Durchführung durch den Gegenstand erzeugt wird. In einer vorteilhaften Ausgestaltung erstreckt sich der Durchführungsbereich und die darauf angeordnete Stützstruktur von einer Seitenfläche bis zur gegenüberliegenden Seitenfläche, so dass eine gerade Durchführung erzeugt wird, wie es bei den meisten Anwendungsfällen erforderlich sein wird. Diese beiden einander gegenüberliegenden Seitenflächen können die Stirnflächen des Gegenstands sein, so dass sich der Durchführungsbereich und die Stützstruktur längs zur Erstreckungsrichtung der Bahnen erstrecken, also in der Längendimension der Bahnen. Der Durchführungsbereich und die Stützstruktur sind dann über die gesamte Länge des Sockelabschnitts auf diesem angeordnet. Die beiden einander gegenüberliegenden Seitenflächen können aber auch die Querseitenflächen des Gegenstands sein, so dass sich der Durchführungsbereich und die Stützstruktur quer, insbesondere senkrecht zur Erstreckungsrichtung der Bahnen erstrecken, also in der Breitendimension der Bahnen. Der Durchführungsbereich und die Stützstruktur sind dann über die gesamte Breite des Sockelabschnitts auf diesem angeordnet. Die Erstreckungsrichtung der Bahnen entspricht den Bewegungsrichtungen des Druckkopfes. Grundsätzlich können die beiden besagten Seitenflächen aber auch benachbarte Seitenflächen sein, so dass die Durchführung gleichsam abgewinkelt verläuft und der Durchführungsbereich und die Stützstruktur sich teilweise längs und teilweise quer zur Erstreckungsrichtung der Bahnen erstrecken.

Erfindungsgemäß werden auf den Wandbereich Bahnen der Beton- oder Mörtelmasse schichtweise aufeinander angeordnet und dadurch der Wandabschnitt beziehungsweise die Wandabschnitte erzeugt. In einer möglichen Ausführung werden die weiteren Bahnen der Beton- oder Mörtelmasse auf den Wandbereich und die Stützstruktur aufgebracht. Die Abscheidung der Beton- oder Mörtelmasse erfolgt durch die Düse erfolgt dann wie auch im Sockelabschnitt und im Deckabschnitt und jede Bahn bedeckt den Wandbereich und die Stützstruktur. Ein zwischenzeitliches Unterbrechen der Zufuhr an Beton- oder Mörtelmasse ist nicht erforderlich. Anschließend wird die auf die Stützstruktur aufgebrachte Beton- oder Mörtelmasse wieder entfernt, so dass die Beton- oder Mörtelmasse allein auf dem Wandbereich verbleibt. Das Entfernen der Beton- oder Mörtelmasse kann bahnweise erfolgen, so dass die Beton- oder Mörtelmasse einer Bahn entfernt wird, bevor die nächste Bahn aufgebracht wird. Es können aber auch zunächst mehrere oder sämtliche Bahnen abgeschieden und anschließend gemeinsam entfernt werden. Das Entfernen der (noch fließfähigen) Beton- oder Mörtelmasse kann beispielsweise erfolgen durch Abblasen, Spachteln, Abwischen oder Abspülen. Es ist auch denkbar, die Stützstruktur mit einer geneigten oberen Oberfläche zu versehen, so dass die darauf abgeschiedene Beton- oder Mörtelmasse herunterrutscht.

Es ist aber auch möglich, die Beton- oder Mörtelmasse ausschließlich auf den Wandbereich aufzubringen, so dass die Stützstruktur nicht mit der Beton- oder Mörtelmasse beaufschlagt wird. Im Falle einer Durchführung zwischen den Querseitenflächen (das heißt quer zur Erstreckungsrichtung der Bahnen), welche direkt an eine Stirnfläche des Gegenstands grenzt, kann der 3D-Druck einfach fortgesetzt werden, wobei lediglich die Länge der Bahnen entsprechend der Länge des einseitig an den Durchführungsbereich angrenzenden Wandbereichs verkürzt werden muss. Im Falle einer Durchführung zwischen den Querseitenflächen, welche nicht direkt an eine Stirnfläche des Gegenstands grenzt, so dass der Wandbereich beidseitig an den Durchführungsbereich angrenzt, sind beispielsweise die folgenden Ausführungen denkbar:
- Die Bewegung des Druckkopfes über die gesamte Länge des Gegenstands wird fortgesetzt, wobei die Zufuhr an Beton- oder Mörtelmasse im Bereich der Stützstruktur unterbrochen wird, so dass auf dieser keine Beton- oder Mörtelmasse abgeschieden wird. Sollte die Stützstruktur der Bewegung des Druckkopfes entlang der Bahn im Wege stehen, so kann der Druckkopf (bei unterbrochener Zufuhr an Beton- oder Mörtelmasse) über die Stützstruktur gehoben werden oder seitlich an der Stützstruktur vorbei geführt werden.
- Die beiden Wandabschnitte werden separat voneinander gedruckt. Der Druckkopf wird weiter regelmäßig bewegt, insbesondere mit alternierender Abscheiderichtung, wobei die Länge der Bahnen entsprechend der Länge des jeweiligen Wandabschnitts verkürzt wird. Die beiden Wandabschnitte können mit dem gleichen Druckkopf nacheinander gedruckt werden, wobei die Zufuhr an Beton- oder Mörtelmasse bevorzugt unterbrochen wird, wenn der Druckkopf von dem einen zum anderen Wandabschnitt bewegt wird. Es ist alternativ auch möglich, die beiden Wandabschnitte mit zwei Druckköpfen gleichzeitig zu drucken.

Im Falle einer Durchführung zwischen den Stirnflächen (das heißt längs zur Erstreckungsrichtung der Bahnen), ist beispielsweise die folgende Ausführung möglich: Der Wandabschnitt beziehungsweise die Wandabschnitte werden mit einer Düse gedruckt, welche eine gegenüber der Düse für den Sockelabschnitt und den Deckabschnitt verringerte Breite aufweist, so dass Bahnen mit der Breite des (jeweiligen) Wandabschnitts erzeugt werden.

Die Form des Stützelementes hängt von den Erfordernissen im Einzelfall ab, insbesondere vom Zweck der erzeugten Durchführung. Das Stützelement kann beispielsweise einen rechteckigen, dreieckigen, kreisförmigen oder ovalen Querschnitt (senkrecht zur Erstreckungsrichtung der zu erzeugenden Durchführung) aufweisen. In einer vorteilhaften Ausgestaltung weist das Stützelement eine plane Grundfläche auf, die dem Sockelbereich zugewandt auf diesem angeordnet wird, und eine Breite, die im Verlauf von unten nach oben konstant bleibt oder geringer wird. So lassen sich besonders stabile Wandabschnitte erzeugen, weil keine für den 3D-Druck "abgeschatteten" Bereich existieren. In einer besonders vorteilhaften Ausgestaltung weist die Stützstruktur einen rechteckigen Querschnitt auf. Stützelemente mit rechteckigem Querschnitt sind für die meisten Anwendungen erforderlich und lassen sich besonders gut in den Gegenstand mit näherungsweise quaderförmigen Bahnen integrieren.

In einer Alternative der Erfindung ist eine nur temporäre Stützstruktur vorgesehen, welche nach dem Drucken des Deckabschnitts und einem vollständigen oder teilweisen Aushärten der Beton- oder Mörtelmasse wieder entfernt wird. Die Stützstruktur ist gleichsam ein Platzhalter für die gewünschte Durchführung, welche durch das Entfernen der Stützstruktur entsteht. Diese Ausführungsform eignet sich in besonderem Maße zur Herstellung von Durchführungen quer zur Erstreckungsrichtung der Bahnen, weil sich die Stützstrukturen dann aufgrund ihrer geringeren Ausdehnung leichter entfernen lassen. Sie ist aber auch zur Herstellung von Durchführungen längs zur Erstreckungsrichtung der Bahnen anwendbar. Die Fließfähigkeit der Beton- oder Mörtelmasse muss vor dem Entfernen der Stützstruktur derart abgenommen haben und ihre Formstabilität derart zugenommen haben, dass die Durchführung bestehen bleibt, ohne dass der direkt darüber angeordnete Bereich des Deckabschnitts unter dem Einfluss der Schwerkraft in die Durchführung sacken würde. Dieser Bereich wird durch das Aushärten der Beton- oder Mörtelmasse hinreichend stabilisiert, so dass er keiner Stützung durch die Stützstruktur mehr bedarf, die daraufhin entfernt werden kann. Es ist nicht erforderlich, dass die Phase des Erstarrens (oder gar des Erhärtens) vollständig abgeschlossen ist. Ebenso ist es ausreichend, wenn der Sockelabschnitt, der Wandabschnitt und ein direkt darüber befindlicher Teil des Deckabschnitts hinreichend stabilisiert sind. Da sich der 3D-Druck des Gegenstands je nach dessen Größe aber über mehrere Stunden erstrecken kann, ist es somit möglich, die Stützstruktur bereits zu entfernen, bevor die obersten Bahnen des Deckabschnitts ausgehärtet sind (wenn sie also noch fließfähig sind).

Die temporäre Stützstruktur kann auf verschiedene Arten ausgestaltet sein. In einer Ausgestaltung wird die Stützstruktur als vorgefertigtes Bauteil bereitgestellt und auf den Durchführungsbereich des Sockelabschnitts aufgelegt. Die Stützstruktur ist bevorzugt aus Holz, Metall (insbesondere aufgeschäumte Metalle oder Metalllegierungen), Keramik oder Kunststoff (insbesondere geschäumte Kunststoffe, wie beispielsweise expandiertes Polystyrol ("Styropor")) gefertigt. Der besondere Vorteil von aufgeschäumten Metallen und geschäumten Kunststoffen liegt in ihrem geringen Gewicht, durch welches der Sockelbereich nur wenig belastet wird. Die Stützstruktur kann massiv oder rahmenartig ausgebildet sein. Bei einer rahmenartigen Stützstruktur erstreckt sich eine Durchführung parallel zu den Bahnebenen durch die Stützstruktur. Die Stützstruktur kann nach dem Aushärten der Beton- oder Mörtelmasse einfach herausgeschoben werden oder zunächst zerlegt, beispielsweise zersägt oder zerschnitten, und dann stückweise entnommen werden. Auch eine Entfernung der Stützstruktur durch spanende Verfahren wie Fräsen, Bohren, Hobeln oder Meißeln ist denkbar.

In einer weiteren Ausgestaltung, welche nicht beansprucht wird, ist die Stützstruktur aufblasbar ausgebildet. Sie ist dann einfach zu lagern und kann beispielsweise mit Druckluft aufgeblasen werden, um als Stützstruktur zum Einsatz zu kommen. In einer vorteilhaften Ausführung wird die Stützstruktur während des 3D-Drucks der Wandabschnitte aufgeblasen, und zwar insbesondere derart, dass sie jeweils mit der zuletzt gedruckten Bahn oben im Wesentlichen bündig abschließt, die Höhe der Stützstruktur also stets der aktuellen Höhe des im Aufbau befindlichen Wandabschnitts entspricht. Die darüberliegende Bahn kann dann als Ebene Bahn gedruckt werden und die auf der Stützstruktur befindlichen Beton-oder Mörtelmasse anschließend wieder entfernt werden oder infolge des weiteren Aufblasens der Stützstruktur herunterrutschen.

In einer weiteren Alternative der Erfindung wird die temporäre Stützstruktur mittels 3D-Druck auf dem Durchführungsbereich des Sockelabschnitts erzeugt. Die Herstellung der Stützstruktur kann abgeschlossen sein, bevor mit dem Drucken des mindestens einen Wandabschnitts begonnen wird. Es ist aber auch möglich, die Stützstruktur und den mindestens einen Wandabschnitt gleichzeitig zu drucken. Besonders vorteilhaft ist es, wenn die regelmäßige Bewegung des Druckkopfes beim Übergang vom Sockelabschnitt in den Wandabschnitt nicht unterbrochen oder abgebremst wird, sondern die regelmäßige Bewegung des Druckkopfes während der gesamten Herstellung des Gegenstands konstant bleibt, wobei mit dem Druck der Stützstruktur begonnen wird, wenn der Durchführungsbereich der obersten Bahn des Sockelabschnitts erzeugt worden ist. Die 3D-gedruckte Stützstruktur kann beispielsweise aus Kunststoff gefertigt werden. Besonders bevorzugt die Stützstruktur aus Bauschaum gedruckt, weil dieser nur eine geringe Bindung zur Beton- oder Mörtelmasse ausbildet und sich leicht entfernen lässt. Die Entfernung der 3D-gedruckten Stützstruktur kann beispielsweise durch chemisches Auflösen oder durch spanende Fertigungsverfahren, wie Fräsen, Bohren, Hobeln oder Meißeln erfolgen.

Es kann vorteilhaft sein, zwischen der Beton- oder Mörtelmasse und den ihr zugewandten Oberflächen der Stützstruktur eine Trennschicht anzuordnen. Die Trennschicht verhindert die Ausbildung einer Bindung zwischen Beton- oder Mörtelmasse und der Stützstruktur, so dass die Stützstruktur einfacher wieder entfernt werden kann. Die Trennschicht kann beispielsweise als Kunststofffolie, als Metallfolie, als Papier- oder Pappschicht oder als Schicht einer Seifenlösung ausgebildet sein.

In einer vorteilhaften Ausführung ist die temporäre Stützstruktur mit mindestens einem Standbein ausgestattet. Das mindestens eine Standbein ist geeignet und dafür vorgesehen, die Stützstruktur derart zu stabilisieren, dass sie selbstständig in der erforderlichen Höhe und Position, die sie auf dem Durchführungsbereich einnimmt, stehen kann. Durch das mindestens eine Standbein kann vorteilhaft verhindert werden, dass der Sockelabschnitt durch den Druck, den die Stützstruktur und die darüber abgeschiedenen Bahnen der Beton-oder Mörtelmasse infolge der Schwerkraft auf den darunter befindlichen Sockelabschnitt ausübt, beeinträchtigt wird, bevor er ausgehärtet ist. Das mindestens eine Standbein erstreckt sich ausgehend von der Stützstruktur bis zum Erdboden beziehungsweise Untergrund. Es verläuft nicht durch den Sockelabschnitt hindurch, sondern ist seitlich dazu angeordnet (verläuft seitlich am Sockelbereich vorbei), insbesondere vor einer der Seitenflächen, zwischen denen der Durchführungsbereich mit der Stützstruktur verläuft.

Das Standbein ist insbesondere vorteilhaft für Stützstrukturen, die als vorgefertigte Bauteile bereitgestellt werden, da diese typischerweise ein vergleichsweise hohes Gewicht aufweisen. Die Stützstruktur kann bereits mit dem mindestens einen Standbein ausgestattet sein, wenn sie auf dem Durchführungsbereich angeordnet wird. Das Standbein kann aber auch nachträglich angebracht werden. Aber auch aufblasbare Stützelemente können mit separaten Standbeinen abgestützt werden. Ebenso ist es möglich, ein 3D-gedrucktes Stützelement mit Standbeinen zu versehen. Die Standbeine können dabei entweder nachträglich angebracht werden oder vorher bereitgestellt werden, so dass die anschließend gedruckte Stützstruktur damit verbunden ist.

In einer Ausgestaltung ist die Stützstruktur mit genau einem Standbein ausgestattet, welches einseitig am Sockelbereich vorbei verläuft, oder mit mehreren Standbeinen, welche einseitig am Sockelbereich vorbei verlaufen (sämtliche Standbeine sind also vor derselben Seitenfläche des Sockelbereichs angeordnet). Um trotz der seitlich versetzten Stützstruktur eine ausreichende Standfestigkeit zu gewährleisten, sollte das mindestens eine Standbein mit einem Standfuß ausgestattet sein, der ausreichend breit und schwer oder mit einem separaten Gewicht beschwert ist. Der Vorteil dieser Variante ist, dass die Stützstruktur samt Standbein(en) nach dem Aushärten der Beton- oder Mörtelmasse einfach entfernt werden kann, ohne dass das mindestens eine Standbein abmontiert werden müsste. Das mindestens eine Standbein kann einstückig mit der Stützstruktur ausgebildet sein, oder über eine lösbare Verbindung, beispielsweise eine Schraubverbindung, mit der Stützstruktur verbunden sein.

In einer weiteren Ausgestaltung ist die Stützstruktur mit mindestens zwei Standbeinen ausgestattet, welche beidseitig am Sockelbereich vorbei verlaufen. Es ist also mindestens ein Standbein vor jeder der Seitenflächen angeordnet, zwischen denen der Durchführungsbereich mit der Stützstruktur verläuft. Es ist ausreichend, wenn auf jeder Seite genau ein Standbein vorhanden ist. Diese Standbeine sollten dann mit einem Standfuß ausgestattet sein, der ausreichend breit und schwer oder mit einem separaten Gewicht beschwert ist, so dass die Stützstruktur mit den beiden Standbeinen frei stehen kann. In einer bevorzugten Ausgestaltung ist die Stützstruktur mit mindestens drei Standbeinen ausgestattet. Die drei Standbeine stellen eine ausreichende Standfestigkeit sicher, ohne dass besondere Standfüße notwendig wären. Es ist dann mindestens ein Standbein vor der einen Seitenfläche des Sockelbereichs angeordnet und mindestens zwei vor der anderen Seitenfläche. Besonders bevorzugt ist die Stützstruktur mit mindestens vier Standbeinen ausgestattet, wobei mindestens zwei Standbeine vor der einen Seitenfläche des Sockelbereichs angeordnet sind und mindestens zwei vor der anderen Seitenfläche. Zumindest das Standbein oder die Standbeine vor einer der beiden Seitenflächen des Sockelbereichs sollten mit einer lösbaren Verbindung, beispielsweise eine Schraubverbindung, an der Stützstruktur befestigt sein, so dass sie nach dem Aushärten der Beton- oder Mörtelmasse einfach demontiert werden können, um die Stützstruktur zu entfernen. Alternativ ist es auch denkbar, die Standbeine schwenkbar an der Stützstruktur zu befestigen, so dass sie zur Entnahme der Stützstruktur hochgeklappt werden können.

In einer weiteren Alternative der Erfindung ist eine permanente Stützstruktur vorgesehen, welche dauerhaft im Gegenstand verbleibt. Die Stützstruktur weist dabei eine Durchführung auf, welche die Durchführung des Gegenstands bildet. Die permanente Stützstruktur kann beispielsweise aus Holz, Metall, Kunststoff, Keramik oder ebenfalls aus Beton oder Mörtel gefertigt sein. Bevorzugt wird dasjenige Bauteil, für welches die Durchführung bestimmt ist, als permanente Stützstruktur direkt beim 3D-Druck in den Gegenstand integriert. Die permanente Stützstruktur kann beispielsweise ein Kabelkanal, eine Rohrleitung, ein Türrahmen oder ein Fensterrahmen, insbesondere ein Fenster-Blendrahmen, sein.

Die Stützstruktur kann einteilig oder auch mehrteilig ausgebildet sein. In einer Ausführung der Erfindung ist die die Stützstruktur mehrteilig aus mehreren Abschnitten ausgebildet, welche nacheinander auf dem Durchführungsbereich angeordnet werden. Jeder Abschnitt wird dabei auf einem Bereich des Durchführungsbereichs angeordnet, so dass die benachbarten Abschnitte direkten Kontakt zueinander haben. Diese Ausführung eignet sich in besonderem Maße für den Fall, dass der Durchführungsbereich längs zur Erstreckungsrichtung der Beton- oder Mörtelbahnen verläuft, insbesondere wenn vorgefertigte Bauteile als temporäre oder permanente Stützstruktur verwendet werden. Da in diesem Fall typischerweise vergleichsweise lange Stützstrukturen erforderlich sind, kann es einfacher sein, diese aus mehreren Abschnitten zusammenzusetzen anstatt ein einstückiges Stützelement einzusetzen. Bevorzugt werden die Abschnitte ausgehend von einer Seitenkante des Gegenstands (beziehungsweise des Sockelabschnitts) jeweils direkt benachbart zueinander angeordnet, bis die andere Seitenkante erreicht ist. Die Ausführung ist aber auch zur Herstellung von Durchführungen längs zur Erstreckungsrichtung der Bahnen anwendbar. Das Anordnen der Abschnitte der Stützstruktur erfolgt bevorzugt automatisiert, insbesondere mittels eines (weiteren) Roboters, welcher die Abschnitte greifen und ablegen kann. Die Bewegung erfolgt dabei bevorzugt computergestützt anhand von CAD-Daten (CNC, *Computerised Numerical Control*). Alternativ ist aber auch ein manuelles Ablegen der Abschnitte möglich.

Erfindungsgemäß ist die Stützstruktur geeignet, das Aushärten der umliegenden Beton-oder Mörtelmasse zu beschleunigen. Dies ist insbesondere für temporäre Stützstrukturen vorteilhaft, weil diese dann schneller entfernt werden kann, da die hierfür erforderliche Stabilität der umliegenden Bereiche schneller erreicht wird. In einer Alternative ist die Stützstruktur als vorgefertigtes Bauteil mit einer Heizvorrichtung ausgestattet, um die Beton- oder Mörtelmasse zu erwärmen und das Aushärten dadurch zu beschleunigen. In einer weiteren Alternative absondert eine Stützstruktur als vorgefertigtes Bauteil oder als 3D-gedruckte Struktur Chemikalien, welche das Aushärten beschleunigen. In einer weiteren Alternative ist eine permanente Stützstruktur während des Aushärtens mit einer in der Durchführung angeordneten Heizvorrichtung ausgestattet.

Der erfindungsgemäß hergestellte Gegenstand aus Beton oder Mörtel kann verwendet werden als Bestandteil des Mauerwerks eines Gebäudes. Die Durchführung ist bevorzugt eine Fenster- oder Türöffnung oder für einen (im Falle temporärer Stützelemente) beziehungsweise als (im Falle permanenter Stützelemente) Kabelkanal oder eine Rohrleitung vorgesehen.

Im Folgenden wird die Erfindung anhand einer Zeichnung und Ausführungsbeispielen näher erläutert. Die Zeichnung ist eine schematische Darstellung und nicht maßstabsgetreu. Die Zeichnung schränkt die Erfindung in keiner Weise ein.

Es zeigen:
- Fig. 1: eine Seitenansicht des 3D-Drucks eines Gegenstands aus Beton oder Mörtel während verschiedener Phasen,
- Fig. 2: einen Querschnitt eines Gegenstands aus Beton oder Mörtel während verschiedener Phasen seiner Herstellung,
- Fig. 3: einen Querschnitt durch eine Ausgestaltung eines Gegenstands aus Beton oder Mörtel,
- Fig. 4: einen Querschnitt durch eine weitere Ausgestaltung eines Gegenstands aus Beton oder Mörtel,
- Fig. 5: drei Ansichten eines Sockelbereichs mit darauf angeordneter Stützstruktur gemäß einer Ausführung eines Herstellungsverfahrens,
- Fig. 6: drei Ansichten eines Sockelbereichs mit darauf angeordneter Stützstruktur gemäß einer weiteren Ausführung des Verfahrens,
- Fig. 7: einen Querschnitt eines Gegenstands während verschiedener Phasen seiner Herstellung in einer weiteren Ausführung des Verfahrens,
- Fig. 8: einen Querschnitt durch einen Sockelbereich mit darauf angeordneter Stützstruktur gemäß einer weiteren Ausführung des Verfahrens und
- Fig. 9: ein Flussdiagramm einer Ausführungsform des Verfahrens.
- Fig. 10: zwei Ansichten eines Sockelbereichs mit darauf angeordneter Stützstruktur gemäß einer weiteren Ausführung des Verfahrens,
- Fig. 11: zwei Ansichten eines Sockelbereichs mit darauf angeordneter Stützstruktur gemäß einer weiteren Ausführung des Verfahrens,

Die dargestellten Verfahren zur Herstellung eines Gegenstands (G) aus Beton oder Mörtel werden nicht als solche beansprucht. Die erfindungsgemäße Stützstruktur (5) ist dagegen geeignet, das Aushärten der umliegenden Beton- oder Mörtelmasse (1) zu beschleunigen, wobei die Stützstruktur (5)
- ein vorgefertigtes Bauteil ist, das nach dem Druck des Deckabschnitts (D) und einem vollständigen oder teilweisen Aushärten der Beton- oder Mörtelmasse (1) entfernt wird, und
   - mit einer Heizvorrichtung ausgestattet ist, um die Beton- oder Mörtelmasse (1) zu erwärmen und das Aushärten dadurch zu beschleunigen, oder
   - Chemikalien absondert, die das Aushärten beschleunigen,
      oder
- eine Durchführung aufweist und im Gegenstand (G) verbleibt und in der Durchführung mit einer Heizvorrichtung ausgestattet ist, um die Beton- oder Mörtelmasse (1) zu erwärmen und das Aushärten dadurch zu beschleunigen,
   oder
- mittels 3D-Druck auf dem Durchführungsbereich (B) erzeugt und nach Verfahrensschritt (d) und einem vollständigen oder teilweisen Aushärten der Beton- oder Mörtelmasse (1) entfernt wird und Chemikalien absondert, die das Aushärten beschleunigen.

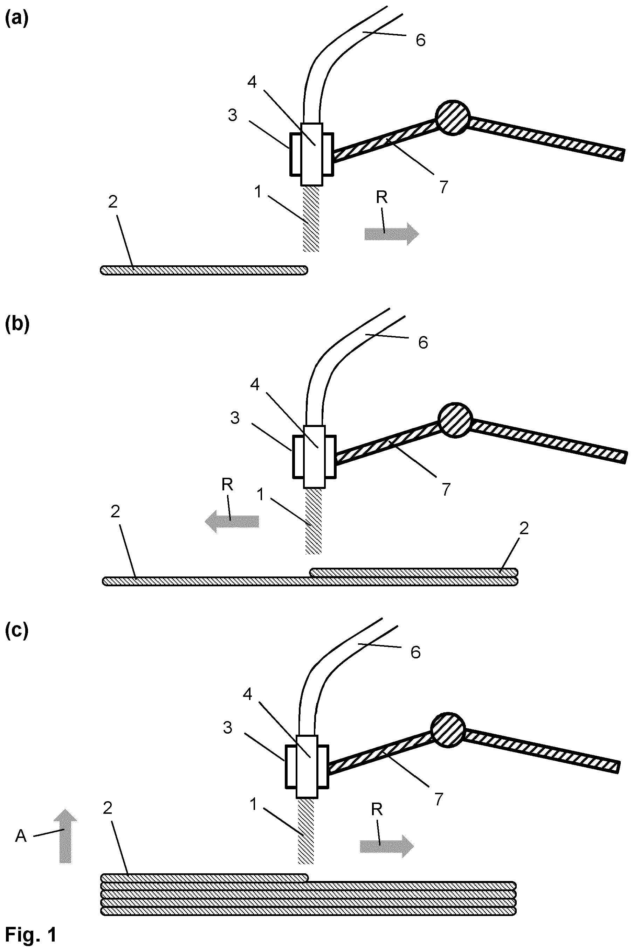

Figur 1 zeigt eine Seitenansicht des 3D-Drucks eines Gegenstands aus Beton oder Mörtel, dessen bereits erzeugten Abschnitte im Querschnitt zu sehen sind. Dabei wird eine Beton-oder Mörtelmasse 1 in Form von Bahnen 2 schichtweise aufeinander gestapelt. Die Beton-oder Mörtelmasse 1 wird mittels eines Druckkopfs 3 aufgebracht, welcher an einem Roboterarm 7 befestigt ist und mit dem dazugehörigen Roboter bewegt wird. Der Druckkopf 3 enthält eine Düse 4, die beispielsweise als Stahlrohr mit einer geeignet geformten Austrittsöffnung ausgebildet ist. An die Düse 4 ist eine Zuleitung 6 angeschlossen, über welche der Düse 4 mittels einer nicht dargestellten Pumpe die Beton- oder Mörtelmasse 1 zugeführt wird. Der Druckkopf 3 wird computergestützt anhand von CAD-Daten entlang der vorberechneten Form der Bahnen 2 bewegt, wobei Beton- oder Mörtelmasse 1 aus der Düse 4 austritt und die Bahnen 2 bildet. Die Bewegungsrichtung R des Druckkopfs 3 ist durch einen grauen Blockpfeil angedeutet. Die Dicke der Bahnen 2 beträgt beispielsweise 2 cm.

Figur 1a zeigt das Verfahren während der Abscheidung der ersten (untersten) Bahn 2. Auf diese wird im Anschluss eine weitere Bahn 2 abgeschieden (Figur 1b). Die Bewegungsrichtung R des Druckkopfs 3 ist bei der Abscheidung der zweiten Bahn 2 derjenigen der ersten Bahn 2 entgegengesetzt. Das Verfahren wird fortgesetzt (Figur 1c), wobei die Bahnen 2 mit alternierender Bewegungsrichtung R aufeinander gestapelt werden in der Aufwuchsrichtung A (ebenfalls durch einen grauen Blockpfeil angedeutet), bis der Gegenstand die gewünschte Höhe erreicht hat.

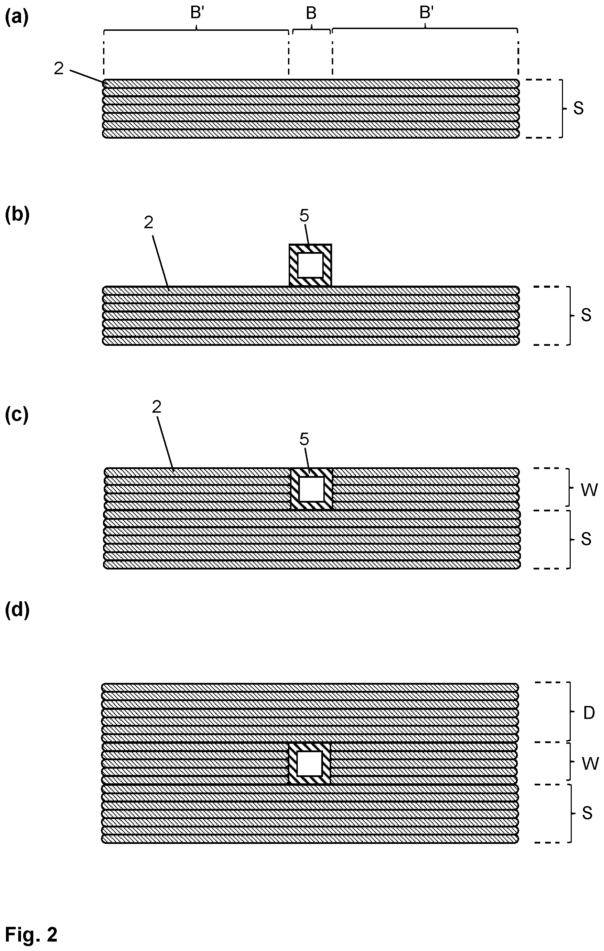

Figur 2 zeigt einen Querschnitt eines Gegenstands zu verschiedenen Zeitpunkten seiner Herstellung in einer Ausführungsform eines Verfahrens. Zunächst wird mittels 3D-Druck, wie in Figur 1 gezeigt, ein unterer Sockelabschnitt S erzeugt (Figur 2a). Die obere Oberfläche der obersten Bahn 2 des Sockelabschnitts 2 kann gedanklich aufgeteilt werden in einen Durchführungsbereich B und einen beidseitig davon angeordneten Wandbereich B'. Direkt oberhalb des Durchführungsbereichs B soll der finale Gegenstand eine Durchführung aufweisen und direkt oberhalb des Wandbereichs B' zwei diese Durchführung begrenzende Wandabschnitte gedruckt werden. Dazu wird auf dem Durchführungsbereichs B eine Stützstruktur 5 angeordnet (Figur 2b). Anschließend werden benachbart zur Stützstruktur 5 zwei Wandabschnitte W gedruckt (Figur 2c). Dabei dann ein vollständige Bahn 2 gedruckt werden, welche den Wandbereich B' und die Stützstruktur 5 bedeckt, und der auf der Stützstruktur 5 angeordnete Bereich dieser Bahn 2 wieder entfernt werden, so dass die Beton- oder Mörtelmasse 1 ausschließlich auf dem Wandbereichs B' verbleibt. Die Wandabschnitte W sind abgeschlossen, wenn sie die Höhe der Stützstruktur 5 erreicht haben. Danach wird oberhalb der Wandabschnitte W und der Stützstruktur 5 ein Deckabschnitt D gedruckt (Figur 2d).

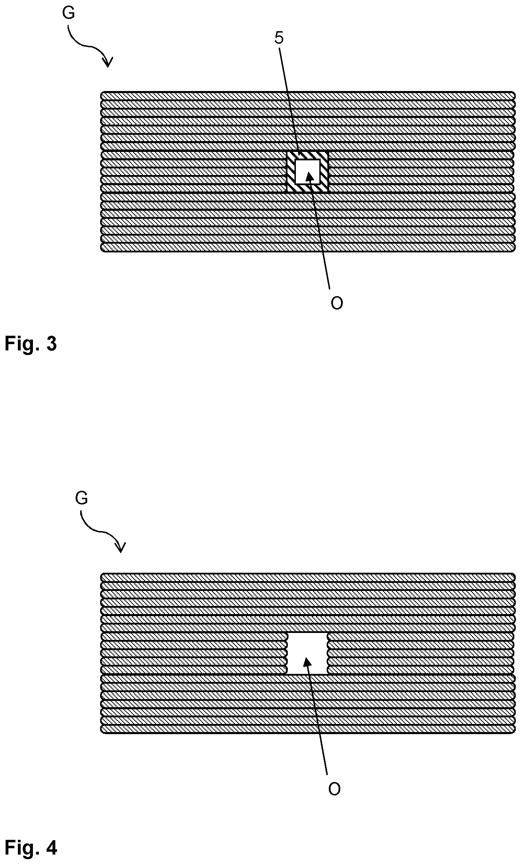

Figur 3 zeigt einen Gegenstand G, der mit dem Verfahren nach Figur 2 hergestellt wurde. Dabei war die Stützstruktur 5 dafür vorgesehen, im Gegenstands G zu verbleiben. Sie weist eine durchgehende Durchführung auf, welche dann die Durchführung O durch den Gegenstand G bildet. Die Stützstruktur 5 kann beispielsweise ein Kabelkanal sein oder ein Fensterrahmen, der direkt beim 3D-Druck in den Gegenstand G integriert wird.

Figur 4 zeigt einen weiteren Gegenstand G, der mit dem Verfahren nach Figur 2 hergestellt wurde. Dabei war die Stützstruktur 5 nur temporär vorgesehen, um die oberhalb befindlichen Teile des Deckabschnitts D zu stabilisieren. Nach dem Aushärten der Beton- oder Mörtelmasse 1 wurde die Stützstruktur 5 wieder entfernt. Die Stützstruktur 5 kann beispielsweise rahmenartig aus Holz oder Metall gefertigt sein und nach dem Aushärten aus dem Gegenstand G herausgeschoben werden, wodurch eine Durchführung O durch den Gegenstand G erzeugt wird. In diese Durchführung O kann später beispielsweise ein Kabelkanal oder ein Fensterrahmen eingesetzt werden.

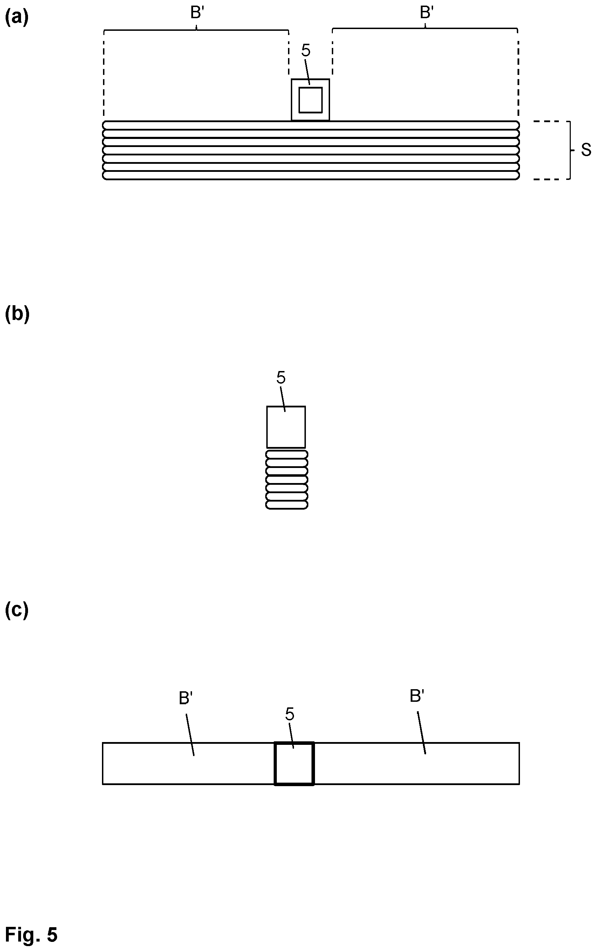

Figur 5 zeigt drei Ansichten eines Sockelbereichs S mit darauf angeordneter Stützstruktur 5 in einer Ausführung eines Herstellungsverfahrens. Dabei zeigen Figur 5a eine Seitenansicht mit Blick auf die Querseitenfläche, Figur 5b eine Seitenansicht mit Blick auf die Stirnfläche und Figur 5c eine Draufsicht ("Blick von oben"). Der Durchführungsbereich B und die darauf angeordnete Stützstruktur 5 erstrecken sich von einer Querseitenfläche zur gegenüberliegenden Querseitenfläche. Dadurch wird eine Durchführung O entlang der Breitendimension der Bahnen 2 beziehungsweise des Gegenstands G erzeugt, wie es auch in Figur 2 gezeigt ist.

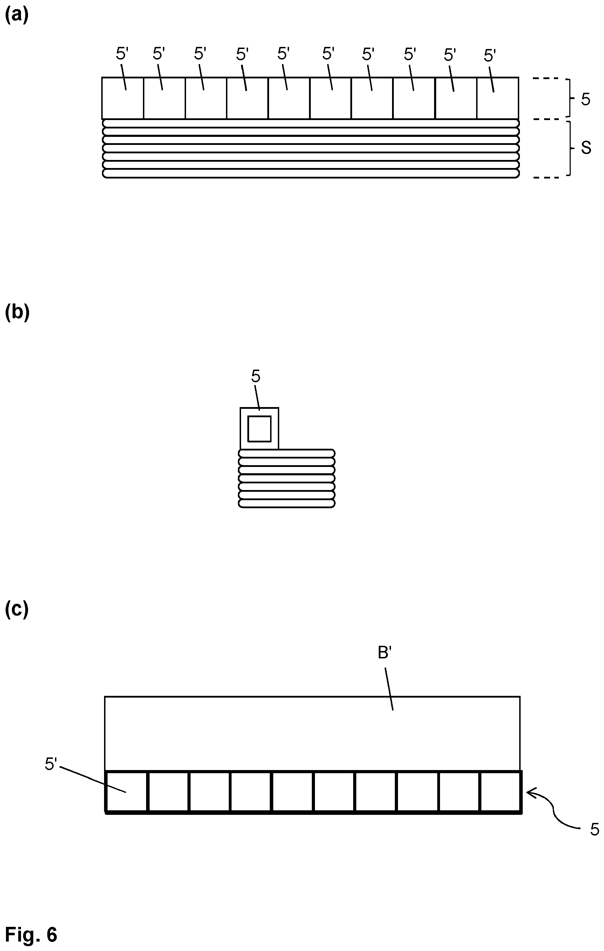

Figur 6 zeigt drei Ansichten eines Sockelbereichs S mit darauf angeordneter Stützstruktur 5 in einer weiteren Ausführung des Verfahrens. Dabei zeigen Figur 6a eine Seitenansicht mit Blick auf die Querseitenfläche, Figur 6b eine Seitenansicht mit Blick auf die Stirnfläche und Figur 6c eine Draufsicht ("Blick von oben"). Der Durchführungsbereich B und die darauf angeordnete Stützstruktur 5 erstrecken sich von einer Stirnfläche zur gegenüberliegenden Stirnfläche. Dadurch wird eine Durchführung O entlang der Längendimension der Bahnen 2 beziehungsweise des Gegenstands G erzeugt. Die Stützstruktur 5 ist mehrteilig aus mehreren Abschnitten 5' ausgebildet. Die Abschnitte 5' wurden nacheinander auf dem Durchführungsbereich B angeordnet, wobei ausgehend von einer Stirnfläche jeder Abschnitt 5' jeweils direkt benachbart zum vorhergehenden Abschnitt 5' mittels eines Roboters abgelegt wurde. Die Stützstruktur 5 auf dem Durchführungsbereich B grenzt direkt an eine Querseitenfläche an, so dass der Wandbereich B' nur einseitig an den Durchführungsbereich B angrenzt. Die mittels der Stützstruktur 5 erzeugte Durchführung O kann beispielsweise als oder für einen Kabelkanal vorgesehen sein, welcher dann über die Querseitenfläche, an welche der Durchführungsbereich B angrenzt, zugänglich ist. So ist es möglich, entweder mit einer temporären Stützstruktur 5 die Durchführung O zu erzeugen, in welche später der Kabelkanal eingesetzt wird, oder den Kabelkanal als permanente Stützstruktur 5 direkt beim 3D-Druck zu integrieren.

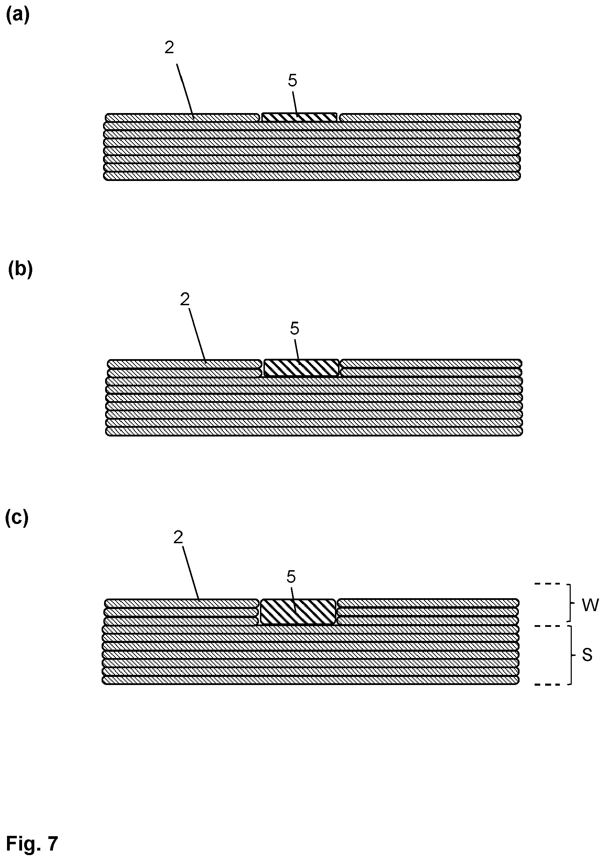

Figur 7 zeigt Querschnitte eines Gegenstands G während des Drucks der Wandabschnitte W. Die Stützstruktur 5 ist aufblasbar und wird während des Drucks der Wandabschnitte W durch Einleitung von Druckluft aufgeblasen. Die Stützstruktur 5 schließt dabei jeweils mit der zuletzt gedruckten Bahn 2 oben bündig ab, so dass eine im Wesentlichen ebene Grundlage für das Drucken der nächsten Bahn 2 bereitgestellt wird.

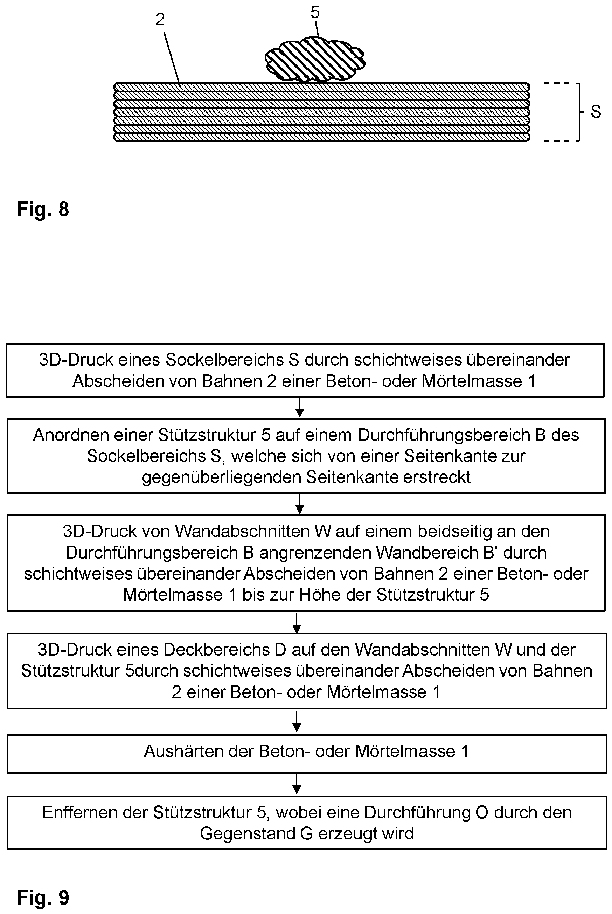

Figur 8 zeigt einen Querschnitt eines Sockelbereichs S mit darauf angeordneter Stützstruktur 5 in einer weiteren Ausführung des Verfahrens. Die Stützstruktur ist aus Bauschaum ausgebildet, der nach Fertigstellung des Sockelbereichs auf dem Durchführungsbereich B mittels 3D-Druck erzeugt wurde. Die Stützstruktur 5 kann nach Fertigstellung der Wandbereiche W und des Deckbereichs D und nach dem Aushärten der Beton- oder Mörtelmasse 1 einfach entfernt werden, beispielsweise mechanisch oder chemisch.

Figur 9 zeigt ein Ausführungsbeispiel des Verfahrens anhand eines Flussdiagramms.

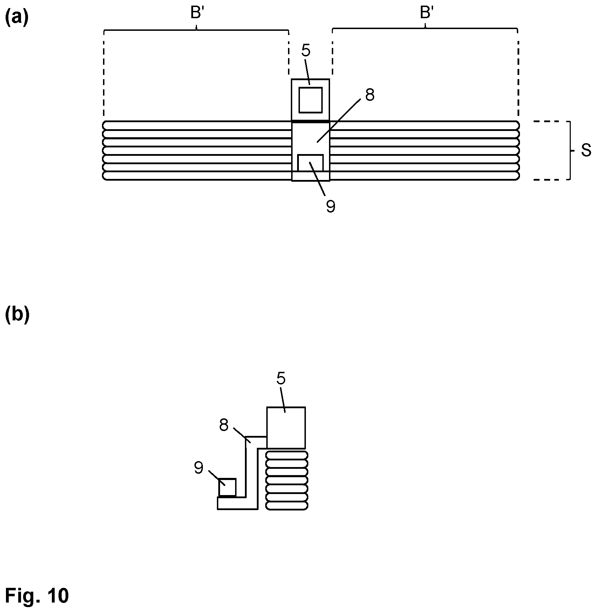

Figur 10 zeigt zwei Ansichten eines Sockelbereichs S mit darauf angeordneter Stützstruktur 5 in einer weiteren Ausführung des Verfahrens. Dabei zeigen Figur 5a eine Seitenansicht mit Blick auf die Querseitenfläche und Figur 5b eine Seitenansicht mit Blick auf die Stirnfläche. Es handelt sich um eine Weiterbildung der Ausführung aus Figur 5. Der Durchführungsbereich B und die darauf angeordnete Stützstruktur 5 erstrecken sich von einer Querseitenfläche zur gegenüberliegenden Querseitenfläche.

Die Stützstruktur 5 ist mit einem einzelnen Standbein 8 ausgestattet, welches sich von der Stützstruktur 5 bis zum Untergrund erstreckt und seitlich am Sockelbereich vorbei verläuft. Die Stützstruktur 5 mit dem Standbein 8 kann frei stehen, so dass die Stützstruktur in der erforderlichen Höhe befindlich ist. Die Schwerkraft des Stützstruktur 5 und der später darüber abgeschiedenen Bahnen des Deckbereich D wird vom Standbein 8 aufgenommen, so dass kein Druck auf den darunter befindlichen Sockelbereich S ausgeübt wird. Dadurch wird verhindert, dass der Sockelbereich S deformiert wird, bevor die Beton- oder Mörtelmasse 1 ausgehärtet ist.

Durch das einseitig angebrachte Standbein 8 lässt sich die Stützstruktur 5 nach dem Aushärten der Beton- oder Mörtelmasse 1 leicht entnehmen. Um trotzdem eine hinreichende Standfestigkeit zu gewährleisten, ist das Standbein 8 breit ausgebildet und mit einem Standfuß versehen, welcher mit einem zusätzlichen Gewicht 9 beschwert ist.

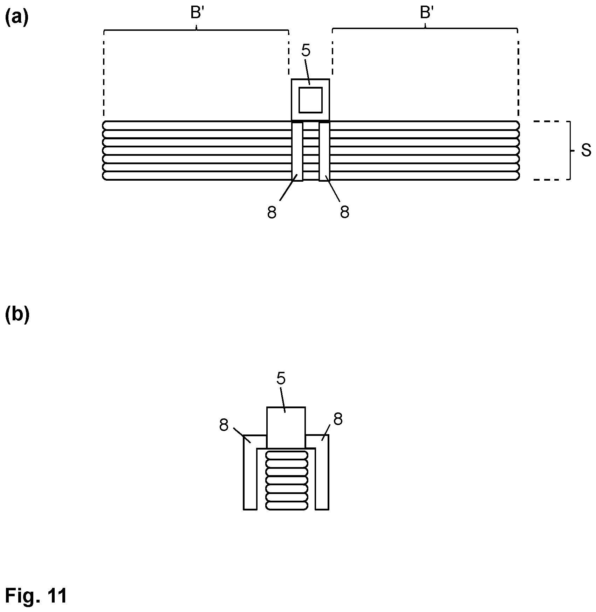

Figur 11 zeigt zwei Ansichten eines Sockelbereichs S mit darauf angeordneter Stützstruktur 5 in einer weiteren Ausführung des Verfahrens. Dabei zeigen Figur 5a eine Seitenansicht mit Blick auf die Querseitenfläche und Figur 5b eine Seitenansicht mit Blick auf die Stirnfläche. Es handelt sich um eine Weiterbildung der Ausführung aus Figur 5. Der Durchführungsbereich B und die darauf angeordnete Stützstruktur 5 erstrecken sich von einer Querseitenfläche zur gegenüberliegenden Querseitenfläche.

Die Stützstruktur 5 ist mit vier Standbeinen 8 ausgestattet, welche sich von der Stützstruktur 5 bis zum Untergrund erstrecken. An jeder Seite des Sockelbereichs S (vor jeder der beiden Querseitenflächen) sind zwei Standbeine 8 angeordnet. Durch die vier Standbeine 8 wird eine ausreichende Standfestigkeit sichergestellt, ohne das beschwerte Standfüße nötig sind. Zumindest die beiden Standbeine 8 auf einer der beiden Seiten des Sockelbereichs S sind beispielsweise an der Stützstruktur angeschraubt, so dass sie nach dem Aushärten der Beton- oder Mörtelmasse 1 einfach demontiert werden können, um die der Stützstruktur 5 zu entfernen.

### Bezugszeichenliste:

- (G): 3D-gedruckter Gegenstand aus Beton oder Mörtel
- (S): Sockelabschnitt des Gegenstands G
- (W): Wandabschnitt des Gegenstands G
- (D): Deckabschnitt des Gegenstands G
- (B): Durchführungsbereich des Sockelabschnitts S
- (B'): Wandbereich des Sockelabschnitts S
- (O): Durchführung durch den Gegenstand G

- (1): Beton- oder Mörtelmasse
- (2): gedruckte Bahn der Beton- oder Mörtelmasse 1
- (3): Druckkopf
- (4): Düse
- (5): Stützstruktur
- (5'): Abschnitt einer mehrteiligen Stützstruktur 5
- (6): Zuleitung
- (7): Roboterarm
- (8): Standbein der Stützstruktur 5
- (9): Gewicht zur Beschwerung des Standbeins 8

- (R): Bewegungsrichtung des Druckkopfes 3
- (A): Aufwuchsrichtung des Gegenstands G'

## Patentansprüche

1. Verfahren zur Herstellung eines Gegenstands (G) aus Beton oder Mörtel mittels 3D-Druck, wobei
(a) Bahnen (2) einer Beton- oder Mörtelmasse (1) schichtweise aufeinander aufgebracht werden, wodurch ein Sockelabschnitt (S) des Gegenstands (G) erzeugt wird,
(b) auf einem Durchführungsbereich (B) des Sockelabschnitts (S) eine Stützstruktur (5) angeordnet wird, welche sich von einer Seitenfläche des Gegenstands (G) zu einer weiteren Seitenfläche erstreckt,
(c) auf einen einseitig oder beidseitig an den Durchführungsbereich (B) angrenzenden Wandbereich (B') weitere Bahnen (2) der Beton- oder Mörtelmasse (1) schichtweise aufeinander aufgebracht werden, wodurch ein einseitig an die Stützstruktur (5) angrenzender Wandabschnitt (W) erzeugt wird oder zwei beidseitig an die Stützstruktur (5) angrenzende Wandabschnitte (W) des Gegenstands (G) erzeugt werden, dessen oder deren Höhe der Höhe der Stützstruktur (5) entspricht,
(d) auf den Wandabschnitt (W) oder die Wandabschnitte (W) und die Stützstruktur (5) weitere Bahnen (2) der Beton- oder Mörtelmasse (1) schichtweise aufeinander aufgebracht werden, wodurch ein Deckabschnitt (D) des Gegenstands (G) erzeugt wird,
wobei die Stützstruktur (5) geeignet ist, das Aushärten der umliegenden Beton- oder Mörtelmasse (1) zu beschleunigen,
**dadurch gekennzeichnet, dass** die Stützstruktur (5)
- ein vorgefertigtes Bauteil ist, das nach Verfahrensschritt (d) und einem vollständigen oder teilweisen Aushärten der Beton- oder Mörtelmasse (1) entfernt wird, und
- mit einer Heizvorrichtung ausgestattet ist, um die Beton- oder Mörtelmasse (1) zu erwärmen und das Aushärten dadurch zu beschleunigen, oder
- Chemikalien absondert, die das Aushärten beschleunigen,
oder
- eine Durchführung aufweist und im Gegenstand (G) verbleibt und in der Durchführung mit einer Heizvorrichtung ausgestattet ist, um die Beton- oder Mörtelmasse (1) zu erwärmen und das Aushärten dadurch zu beschleunigen,
oder
- mittels 3D-Druck auf dem Durchführungsbereich (B) erzeugt und nach Verfahrensschritt (d) und einem vollständigen oder teilweisen Aushärten der Beton- oder Mörtelmasse (1) entfernt wird und Chemikalien absondert, die das Aushärten beschleunigen.

2. Verfahren nach Anspruch 1, wobei die Beton- oder Mörtelmasse (1) mittels eines Druckkopfs (3) aufgebracht wird, der eine Düse (4) umfasst, welcher die Beton- oder Mörtelmasse (1) mittels einer Pumpe über eine Zuleitung (6) zugeführt wird.

3. Verfahren nach Anspruch 2, wobei der Druckkopf (3) durch einen Industrieroboter bewegt wird, bevorzugt mittels eines Roboterarms (7).

4. Verfahren nach Anspruch 1, wenn die Stützstruktur (5) nach Verfahrensschritt (d) und einem vollständigen oder teilweisen Aushärten der Beton-oder Mörtelmasse (1) entfernt wird, wobei die Stützstruktur (5) mit mindestens einem Standbein (8) ausgestattet ist oder wird, welches sich ausgehend von der Stützstruktur (5) bis zum Erdboden erstreckt und dabei seitlich zum Sockelabschnitt (S) angeordnet ist.

5. Verfahren nach Anspruch 1, wenn die Stützstruktur (5) nach Verfahrensschritt (d) und einem vollständigen oder teilweisen Aushärten der Beton-oder Mörtelmasse (1) entfernt wird, oder nach Anspruch 4, wobei die Stützstruktur (5) als vorgefertigtes Bauteil auf den Durchführungsbereich (B) des Sockelabschnitts (S) aufgelegt wird und bevorzugt aus Holz, Metall oder Kunststoff gefertigt ist, besonders bevorzugt aus einem aufgeschäumten Metall, einer aufgeschäumten Metalllegierung oder expandiertem Polystyrol.

6. Verfahren nach Anspruch 1, wenn die Stützstruktur (5) nach Verfahrensschritt (d) und einem vollständigen oder teilweisen Aushärten der Beton-oder Mörtelmasse (1) entfernt wird, oder nach Anspruch 4, wobei die Stützstruktur (5) mittels 3D-Druck auf den Durchführungsbereich (B) des Sockelabschnitts (S) erzeugt wird, bevorzugt aus Bauschaum.

7. Verfahren nach Anspruch 1, wenn die Stützstruktur (5) eine Durchführung aufweist und im Gegenstand (G) verbleibt, wobei die Stützstruktur (5) ein Kabelkanal, eine Rohrleitung, ein Türrahmen oder ein Fensterrahmen ist.

8. Verfahren nach Anspruch 1, wenn die Stützstruktur (5) eine Durchführung aufweist und im Gegenstand (G) verbleibt, oder nach Anspruch 5, wobei die Stützstruktur (5) mehrteilig aus mehreren Abschnitten (5') ausgebildet ist, welche nacheinander auf dem Durchführungsbereich (B) angeordnet werden, bevorzugt durch einen Roboter.

9. Verfahren nach einem der Ansprüche 1 bis 8, wobei die Beton- oder Mörtelmasse (1) zumindest eine Gesteinskörnung, ein Bindemittel, bevorzugt Zement oder Kalk, und Zugabewasser enthält, sowie optional Betonzusatzstoffe und Betonzusatzmittel.

## Claims

1. Method for producing an article (G) made of concrete or mortar by means of 3D printing, in which
(a) webs (2) of a concrete or mortar compound (1) are applied on top of one another in layers, as a result of which a base portion (S) of the article (G) is produced,
(b) a support structure (5) is arranged on a feedthrough region (B) of the base portion (S), which support structure extends from a lateral surface of the article (G) to a further lateral surface,
(c) further webs (2) of the concrete or mortar compound (1) are applied on top of one another in layers on a wall region (B') which is adjacent to the feedthrough region (B) on one or both sides, as a result of which a wall portion (W) is produced which is adjacent to the support structure (5) on one side, or two wall portions (W) of the article (G) are produced which are adjacent to the support structure (5) on both sides, the height of which wall portion or wall portions corresponds to the height of the support structure (5),
(d) further webs (2) of the concrete or mortar compound (1) are applied on top of one another in layers on the wall portion (W) or wall portions (W) and the support structure (5), as a result of which a cover portion (D) of the article (G) is produced,
the support structure (5) being suitable for accelerating the curing of the surrounding concrete or mortar compound (1),
**characterised in that** the support structure (5)
- is a prefabricated component which is removed after method step (d) and a complete or partial curing of the concrete or mortar compound (1), and
- is equipped with a heating device in order to heat the concrete or mortar compound (1) and thereby accelerate curing, or
- secretes chemicals which accelerate curing,
or
- comprises a feedthrough and remains in the article (G) and is equipped with a heating device in the feedthrough in order to heat the concrete or mortar compound (1) and thereby accelerate curing,
or
- is produced on the feedthrough region (B) by means of 3D printing and is removed after method step (d) and a complete or partial curing of the concrete or mortar compound (1) and secretes chemicals which accelerate curing.

2. Method according to claim 1, wherein the concrete or mortar compound (1) is applied by means of a print head (3) having a nozzle (4) to which the concrete or mortar compound (1) is supplied by means of a pump via a supply line (6).

3. Method according to claim 2, wherein the print head (3) is moved by an industrial robot, preferably by means of a robot arm (7).

4. Method according to claim 1, if the support structure (5) is removed after method step (d) and a complete or partial curing of the concrete or mortar compound (1), wherein the support structure (5) is equipped with at least one support leg (8) which extends from the support structure (5) to the ground and is arranged laterally to the base portion (S).

5. Method according to claim 1, if the support structure (5) is removed after method step (d) and a complete or partial curing of the concrete or mortar compound (1), or according to claim 4, wherein the support structure (5), as a prefabricated component, is placed onto the feedthrough region (B) of the base portion (S) and is preferably made of wood, metal or plastics material, particularly preferably a foamed metal, a foamed metal alloy or expanded polystyrene.

6. Method according to claim 1, if the support structure (5) is removed after method step (d) and a complete or partial curing of the concrete or mortar compound (1), or according to claim 4, wherein the support structure (5) is produced on the feedthrough region (B) of the base portion (S) by means of 3D printing, preferably from construction foam.

7. Method according to claim 1, if the support structure (5) comprises a feedthrough and remains in the article (G), wherein the support structure (5) is a cable channel, pipeline, door frame or window frame.

8. Method according to claim 1, if the support structure (5) comprises a feedthrough and remains in the article (G), or according to claim 5, wherein the support structure (5) is formed in multiple parts from a plurality of portions (5') which are arranged in succession on the feedthrough region (B), preferably by a robot.

9. Method according to any of claims 1 to 8, wherein the concrete or mortar compound (1) contains at least one aggregate, a binder, preferably cement or lime, and mixing water, and optionally concrete additives and concrete admixtures.

## Revendications

1. Procédé permettant la fabrication d'un objet (G) en béton ou en mortier au moyen d'une impression 3D, dans lequel
(a) des bandes (2) d'une matière de béton ou de mortier (1) sont appliquées couche par couche les unes sur les autres, moyennant quoi une section de socle (S) de l'objet (G) est produite,
(b) une structure de support (5) qui s'étend d'une surface latérale de l'objet (G) à une autre surface latérale est disposée sur une zone de traversée (B) de la section de socle (S),
(c) d'autres bandes (2) de la matière de béton ou de mortier (1) sont appliquées couche par couche les unes sur les autres sur une zone de paroi (B') adjacente d'un côté ou des deux côtés à la zone de traversée (B), moyennant quoi une section de paroi (W) adjacente d'un côté à la structure de support (5) est produite ou deux sections de paroi (W) de l'objet (G) adjacentes des deux côtés à la structure de support (5) sont produites, dont la hauteur de ladite ou desdites sections de paroi correspond à la hauteur de la structure de support (5),
(d) d'autres bandes (2) de la matière de béton ou de mortier (1) sont appliquées couche par couche les unes sur les autres sur la section de paroi (W) ou les sections de paroi (W) et la structure de support (5), moyennant quoi une section de recouvrement (D) de l'objet (G) est produite,
dans lequel la structure de support (5) est adaptée pour accélérer le durcissement de la matière de béton ou de mortier (1) environnante,
**caractérisé en ce que** la structure de support (5)
- est une pièce préfabriquée qui est retirée après l'étape de procédé (d) et après un durcissement total ou partiel de la matière de béton ou de mortier (1), et
- est équipée d'un dispositif de chauffage afin de chauffer la matière de béton ou de mortier (1) et d'accélérer ainsi le durcissement, ou
- sécrète des substances chimiques qui accélèrent le durcissement,
ou
- présente une traversée et reste dans l'objet (G) et est équipée d'un dispositif de chauffage dans la traversée afin de chauffer la matière de béton ou de mortier (1) et d'accélérer ainsi le durcissement,
ou
- est produite au moyen d'une impression 3D sur la zone de traversée (B) et retirée après l'étape de procédé (d) et après un durcissement total ou partiel de la matière de béton ou de mortier (1) et sécrète des substances chimiques qui accélèrent le durcissement.

2. Procédé selon la revendication 1, dans lequel la matière de béton ou de mortier (1) est appliquée au moyen d'une tête d'impression (3) qui comprend une buse (4) à laquelle est amenée la matière de béton ou de mortier (1) au moyen d'une pompe par l'intermédiaire d'une conduite d'alimentation (6).

3. Procédé selon la revendication 2, dans lequel la tête d'impression (3) est déplacée par un robot industriel, de préférence au moyen d'un bras de robot (7).

4. Procédé selon la revendication 1, lorsque la structure de support (5) est retirée après l'étape de procédé (d) et après un durcissement total ou partiel de la matière de béton ou de mortier (1), dans lequel la structure de support (5) est équipée d'au moins une jambe d'appui (8) qui s'étend à partir de la structure de support (5) jusqu'au sol et est alors disposée latéralement par rapport à la section de socle (S).

5. Procédé selon la revendication 1, lorsque la structure de support (5) est retirée après l'étape de procédé (d) et après un durcissement total ou partiel de la matière de béton ou de mortier (1), ou selon la revendication 4, dans lequel la structure de support (5) est posée en tant que pièce préfabriquée sur la zone de traversée (B) de la section de socle (S) et est fabriquée de préférence en bois, métal ou plastique, de manière particulièrement préférée en un métal expansé, un alliage métallique expansé ou en polystyrène expansé.

6. Procédé selon la revendication 1, lorsque la structure de support (5) est retirée après l'étape de procédé (d) et après un durcissement total ou partiel de la matière de béton ou de mortier (1), ou selon la revendication 4, dans lequel la structure de support (5) est produite au moyen d'une impression 3D sur la zone de traversée (B) de la section de socle (S), de préférence en mousse de construction.

7. Procédé selon la revendication 1, lorsque la structure de support (5) présente une traversée et reste dans l'objet (G), dans lequel la structure de support (5) est un conduit de câbles, une conduite, un cadre de porte ou un cadre de fenêtre.

8. Procédé selon la revendication 1, lorsque la structure de support (5) présente une traversée et reste dans l'objet (G), ou selon la revendication 5, dans lequel la structure de support (5) est formée en plusieurs parties à partir de plusieurs sections (5') qui sont disposées les unes après les autres sur la zone de traversée (B), de préférence par un robot.

9. Procédé selon l'une des revendications 1 à 8, dans lequel la matière de béton ou de mortier (1) contient au moins un granulat, un liant, de préférence du ciment ou de la chaux, et de l'eau ajoutée, ainsi que, éventuellement, des adjuvants pour béton et des additifs pour béton.
